# EUROPÄISCHE PATENTSCHRIFT

(11) **EP 2 709 778 B1**
(45) Veröffentlichungstag und Bekanntmachung des Hinweises auf die Patenterteilung: **21.10.2020**
(21) Anmeldenummer: 12719695.4
(22) Anmeldetag: 04.05.2012
(51) Int. Cl.: B21D 5/00, B21D 11/10, B21D 11/20, B21D 47/00, E02D 5/04, B21D 17/04, B23K 26/20, B23K 26/14, B21D 39/02, E04B 5/40

(54) **VERFAHREN UND VORRICHTUNG ZUR HERSTELLUNG EINES STAHLPROFILS UND EIN SOLCHES STAHLPROFIL**
METHOD AND DEVICE FOR PRODUCING A STEEL PROFILED ELEMENT AND SAID TYPE OF STEEL PROFILED ELEMENT
PROCÉDÉ DE FABRICATION D'UN PROFILÉ EN ACIER ET UN TEL PROFILÉ

(30) Priorität: 05.05.2011 DE 102011100633
(43) Veröffentlichungstag der Anmeldung: 26.03.2014
(73) Patentinhaber: Origami Steel Corp., Austin, TX 78747 (US)
(72) Erfinder: WÜNSCH, Achim, 80538 München (DE)
(74) Vertreter: Eisenführ Speiser
(86) Internationale Anmeldenummer: PCT/EP2012/058311
(87) Internationale Veröffentlichungsnummer: WO 2012/150352

(56) Entgegenhaltungen:
- WO-A1-03/018927
- WO-A1-2006/125248
- WO-A1-2009/118498
- GB-A- 2 306 526
- GB-A- 2 397 074
- JP-A- 7 100 528
- JP-A- 9 057 352
- JP-A- 10 015 619
- JP-A- 2008 137 105
- US-A- 3 287 041
- US-A- 4 024 691
- US-A- 4 223 503
- US-A- 5 867 949
- US-A- 5 904 343
- US-B1- 7 574 839

## Beschreibung

Die Erfindung liegt auf dem Gebiet der Stahlverarbeitung und Stahlherstellung, insbesondere der Herstellung von Stahlprofilen. Die Erfindung betrifft ein Verfahren zur Herstellung eines Stahlprofils. Die Erfindung betrifft weiterhin ein Stahlprofil, insbesondere hergestellt gemäß einem vorgenannten Verfahren. Die Erfindung betrifft ferner eine Spundbohle, insbesondere Z-Spundbohle.

Verfahren zur Herstellung eines Stahlprofils, Stahlprofile, Spundbohlen und Systeme zur Herstellung eines Stahlprofils sind aus dem Stand der Technik grundsätzlich bekannt. Häufig werden Stahlprofile in Stahlwerken im Stranggussverfahren, im Warmwalz- oder Kaltwalzverfahren hergestellt. Bekannt sind zudem Stahlprofile, die durch Massivumformen von Stahlrohlingen hergestellt werden. Bei dem Bau von Spundwänden werden Stahlprofile häufig als Spundwandkomponenten in Form von Spundbohlen verwendet. Dabei sind insbesondere sogenannte Z-Spundbohlen und U-Spundbohlen bekannt, die mittels unterschiedlicher Schlossformen, z.B. mittels sogenannter Larssenschlösser, miteinander verbunden werden. Die Spundbohlen werden dabei in der Regel miteinander verbunden, indem die Schlösser beim Einlassen, Rammen oder Rütteln ins Erdreich ineinander geschoben werden.

Ein bekanntes Verfahren der eingangs genannten Art ist in der JP 2008 137105 A offenbart

Die JP 2008 137105 A bildet die Basis für den Oberbegriff des Anspruchs 1.

Ein Stahlprofil umfassend ein Werkstück, welches in einem Biegebereich eine Schwächung aufweist, ist ebenfalls aus der JP 2008 137105 A bekannt.

Aufgabe der vorliegenden Erfindung ist es, ein verbessertes Verfahren zur Herstellung eines Stahlprofils, ein verbessertes Stahlprofil, eine verbesserte Spundbohle und ein verbessertes System zur Herstellung eines Stahlprofils aus einem Werkstück zur Verfügung zu stellen.

Diese Aufgabe wird erfindungsgemäß durch ein Verfahren zur Herstellung eines Stahlprofils nach Anspruch 1 gelöst.

Die Erfindung hat erkannt, dass die bekannten Verfahren mehrere Nachteile aufweisen. Zum einem sind die bekannten Verfahren energieintensiv, arbeitsintensiv und mit hohen Rüst- bzw. Anlaufkosten verbunden. Daraus resultieren hohe Mindestbestellmengen und vergleichsweise lange Lieferzeiten, so dass eine weit vorausschauende Produktionsplanung und ein hoher Lagerbestand notwendig sind, um flexibel auf Kundenbestellungen reagieren zu können.

Die Vorteile des erfindungsgemäßen Verfahrens liegen darin, dass eine autonome, flexible und vollautomatischen Produktion von Stahlprofilen, bevorzugt direkt von einem Coil bzw. einer Band-Stahlrolle oder ausgehend von Flachstahlwerkstücken ermöglicht wird. Zudem werden Produktionskosten durch vergleichsweise geringe Rüstkosten, geringe Arbeitskosten und geringen Materialverlust niedrig gehalten. Die bei Anwendung des Verfahrens erzielte bedarfsgerechte und zeitnahe Produktion ermöglicht zudem niedrige Lagerungskosten. Desweiteren arbeitet das Verfahren energieeffizient, sauber und umweltfreundlich. Energie wird insbesondere bei der Verarbeitung von dickwandigem Stahl eingespart.

Erfindungsgemäß verläuft die Schwächung des Werkstücks im Bereich einer vorgesehenen Biegung des Werkstücks.

Bei dem erfindungsgemäßen Verfahren wird die Schwächung durch Bilden einer Ausnehmung, insbesondere einer Kerbung, in dem Werkstück gebildet. Dies stellt eine besonders zweckmäßige und einfache Variante zum Bilden einer Schwächung im Bereich einer vorgesehenen Biegung des Werkstücks dar.

Unter dem Begriff Kerbung ist im Rahmen der vorliegenden Erfindung eine Ausnehmung zu verstehen, welche derart im Werkstück gebildet wird, dass sie ein offenes Ende aufweist.

Bei dem erfindungsgemäßen Verfahren erfolgt das Bilden der die Schwächung bildenden Ausnehmung, durch Fräsen. Dadurch können Schwächungen besonders einfach und ggf. automatisiert in dem Werkstück gebildet werden.

Bei dem erfindungsgemäßen Verfahren wird die Schwächung nach dem Biegen durch Laserschweißen, bevorzugt durch ein Laserhybrid-Schweißverfahren, verstärkt. Durch das Verstärken einer für das Biegen vorgesehenen Schwächung nach dem Biegen wird ein Stahlprofil mit besonders hoher Steifigkeit hergestellt.

Erfindungsgemäß dient das Schweißen dazu, eine beim Biegen teilweise geschlossene Ausnehmung komplett zu schließen. Dabei können beispielsweise aneinander stoßende Enden der Ausnehmung des Werkstücks durch Schweißen unlösbar verbunden werden.

Unter dem Begriff Laserschweißen ist im Rahmen der vorliegenden Erfindung das unlösbare Verbinden von zwei Enden eines Stahlprofils unter Verwendung eines optisch fokussierten Laserstrahls mit hoher Intensität zu verstehen.

Gemäß dem erfindungsgemäßen Verfahren erfolgt das Schweißen mittels eines fokussierten Laserstrahls, welcher von der Biegeaußenseite des Werkstücks hin zur Biegeinnenseite entlang eines von der Ausnehmung nach dem Biegen gebildeten Nullspalts gerichtet ist, dessen Fokus innerhalb des Werkstücks (1300) liegt. Der Begriff Nullspalt ist im Rahmen der vorliegenden Erfindung derart zu verstehen, dass die Schenkel der Ausnehmung nach dem Biegen aneinanderliegen, z.B. Kontakt haben, ohne eine chemische Verbindung zu bilden.

Grundsätzlich ist bei einer einzigen Biegung des Werkstücks eine Schweißen von der Biegeaußenseite des Werkstücks zur Biegeinnenseite hin wie auch von der Biegeinnenseite zur Biegeaußenseite hin unabhängig vom Biegewinkel möglich. Bei der Herstellung eines Stahlprofils können jedoch einige Biegungen nicht von der Biegeinnenseite ausgehend geschweißt werden, da einzelne Biegeinnenseiten bzw. Nullspalte durch benachbarte Leisten des Werkstücks verdeckt werden und somit für einen Laserstrahl nicht zugänglich sind. Zudem kann durch einen Laserstrahl, welcher von der Biegeaußenseite zur Biegeinnenseite gerichtet ist, das Schweißen besonders einfach durchgeführt werden. Bevorzugt wird dabei ein einzelner fokussierter Laserstrahl, anstatt eines oszillierenden Strahls oder zweier partieller Laserstrahlen, verwendet.

Bei dem erfindungsgemäßen Verfahren wird eine die Schwächung bildende Ausnehmung, welche an einer Biegeinnenseite ausgebildet ist, beim Biegen verkleinert oder geschlossen. Bevorzugt wird eine die Schwächung bildende Ausnehmung, welche an einer Biegenaußenseite des Werkstücks ausgebildet ist, beim Biegen vergrößert. Dies stellt eine besonders zweckmäßige Ausführungsform des Verfahrens dar, bei dem eine die Schwächung bildende Ausnehmung für das Biegen besonders geeignet ausgebildet ist. Zudem wird das Verfahren dadurch vereinfacht, da eine vor dem Biegen gebildete Materialaussparung derart ausgeführt werden kann, dass diese an die vorzunehmende Biegung entsprechend anpassbar ist. Bevorzugt ist die Ausnehmung an einen vorgesehenen Biegewinkel anpassbar.

Bei dem erfindungsgemäßen Verfahren wird die Ausnehmung nach dem Biegen durch Laserschweißen geschlossen. Damit wird ein Verfahren angegeben, mit dem eine Ausnehmung, die beim Biegen zunächst verkleinert wird, durch Schweißen zur Verstärkung des Stahlprofils geschlossen wird.

In einem weiteren Ausführungsbeispiel des erfindungsgemäßen Verfahrens werden Schenkel, welche eine die Schwächung bildende Ausnehmung begrenzen, unlösbar verbunden. Damit wird eine für das Biegen vorgesehene Schwächung zusätzlich nach dem Biegen verstärkt.

Nach einer anderen zweckmäßigen Ausführungsform des erfindungsgemäßen Verfahrens erfolgt das Biegen durch freies Biegen, Schwenkbiegen oder Gesenkbiegen. Dadurch kann das Biegen des Werkstücks zum Bilden eines Stahlprofils besonders einfach und automatisiert erfolgen.

Nach einer weiteren bevorzugten Ausführungsform des erfindungsgemäßen Verfahrens erfolgt das Bereitstellen des Werkstücks durch Entrollen einer Bandstahlrolle, insbesondere eines Coils. Unter dem Begriff Coil ist im Rahmen der vorliegenden Erfindung ein aufgewickeltes Metallband, beispielsweise in Form einer Bandstahlrolle zu verstehen.

Gemäß einer weiteren bevorzugten Ausführungsform des erfindungsgemäßen Verfahrens wird in ein Werkstück, welches als Bandstahlrohling ausgebildet ist, vor dem Biegen eine Ausnehmung eingebracht, die quer zur Längsrichtung des Bandstahlrohlings ausgerichtet ist und zu einer seitlichen Begrenzung des Bandstahlrohlings offen ist. Die Ausnehmung kann beispielsweise als schlitzartige Ausnehmung ausgebildet sein, welche beispielsweise mittels eines Stanzwerkzeugs, eines hochenergetischen Laserstrahls oder eine Stahlsäge seitlich in den Bandstahlrohling eingebracht wird. Die Längsrichtung des Bandstahlrohlings ist dabei vorzugsweise die Richtung, in der sich der Bandstahlrohling während des Herstellungsprozesses bewegt, beispielsweise auf einem Fließband. Dies kann insbesondere auch die Richtung sein, in der ein von einer Bandstahlrolle abgewickelter Bandstahl dem Fließband zugeführt wird.

Die Ausnehmungen ermöglichen es, dass Arbeitsschritte im Herstellungsprozess in einem ersten Bereich des Bandstahlrohlings ausgeführt werden können, ohne dass dies einen Einfluss auf einen zweiten Bereich des Bandstahlrohlings hat, der von dem ersten Bereich durch die Ausnehmung getrennt ist.

Nach einer bevorzugten Fortbildung der vorstehend genannte Ausführungsform ragt die Ausnehmung derart in den Bandstahlrohling hinein, dass ein Biegemoment in einem ersten Bereich des Bandstahlrohlings, welcher einen ersten Abschnitt der Ausnehmung begrenzt, sich nicht auf einen zweiten Bereich des Bandstahlrohlings überträgt, welcher einen zweiten Abschnitt der Ausnehmung begrenzt. Dadurch wird eine erhebliche Vereinfachung des Herstellungsprozesses eines Stahlprofils bei der Verwendung von Bandstahlrohlingen erzielt. Die gemäß dem erfindungsgemäßen Verfahren erfolgenden Biegungen können vorgenommen werden, ohne dass eine Notwendigkeit besteht, einzelne Abschnitte des Bandstahlrohlings vor dem Biegen komplett voneinander zu trennen. Dabei werden die Ausnehmungen jeweils mit einer vorgegebene Tiefe in den Bandstahlrohling derart eingebracht, dass sich ein Biegemoment in einem ersten Bereich des Bandstahlrohling nicht auf einen zweiten Bereich des Bandstahlrohlings überträgt, die beiden Bereiche aber trotzdem in einem vorgegebenen Abschnitt des Bandstahlrohlings verbunden bleiben.

Bei dem erfindungsgemäßen Herstellungsprozess eines Stahlprofils befindet sich der erste Bereich des Bandstahlrohlings beispielsweise in einer Biegevorrichtung, so dass das Werkstück darin gebogen werden kann. Die Ausnehmung dient in diesem Fall dazu, dass die Biegung sich nicht auf einen zweiten Bereich des Bandstahlrohlings überträgt, der sich beispielsweise noch in der Schwächungsvorrichtung befindet.

Die eingangs genannte Aufgabe wird auch erfindungsgemäß gelöst durch ein Stahlprofil gemäß Anspruch 7.

Die vorliegende Erfindung hat erkannt, dass die bekannten Stahlprofile mehrere Nachteile aufweisen. Bisher bekannte Stahlprofile können nur mit besonders hohem Energieaufwand gebogen werden. Je nach Biegeverfahren entstehen dabei Materialansammlungen und -verzerrungen, beispielsweise an der Biegeinnenseite des Werkstücks, welche im Rahmen einer Endbearbeitung entfernt werden müssen.

Ein Vorteil des erfindungsgemäßen Stahlprofils ist, dass ein Biegeverfahren zum Bilden eines Stahlprofils besonders einfach und energieeffizient durchgeführt werden kann. Zudem werden Materialkosten niedrig gehalten.

Bei dem erfindungsgemäßen Stahlprofil ist die Schwächung als Ausnehmung in dem Werkstück ausgebildet. Damit ist die Schwächung besonders einfach und zweckmäßig ausgebildet.

Bei dem erfindungsgemäßen Stahlprofil weist das Werkstück im Biegebereich eine im Wesentlichen W-förmige Ausnehmung auf. Eine W-förmige Ausnehmung in diesem Sinne kann auch von zwei nebeneinander liegenden V-förmigen Ausnehmungen gebildet werden. Nach dem Biegen liegen die Schenkel der W-förmigen Ausnehmung, d.h. die jeweiligen Schenkel der zwei V-förmigen Ausnehmungen, aneinander und bilden einen Nullspalt. Dieser Nullspalt kann dann durch Schweißen, insbesondere Laserschweißen, geschlossen werden.

Ein wesentlicher Vorteil einer W-förmigen Ausnehmung liegt darin, dass beim Biegen des Werkstücks nur ein besonders kleiner Bereich verformt wird d.h. kaltumgeformt wird. Bei einer W-förmigen Ausnehmung, die zur Biegeinnenseite offen ist, wird nur der der Biegeinnenseite abgewandte Bereich des Werkstücks beim Biegen verformt. Dadurch wird die Festigkeit des Materials des Werkstücks beim Biegen nur in geringem Maße beeinflusst. Dies ist von besonderer Wichtigkeit bei der Verwendung von Stahlprofilen, da der verformte Bereich einerseits härter aber auch spröder wird.

Gemäß einer weiteren bevorzugten Ausführungsform des erfindungsgemäßen Stahlprofils weist das Werkstück eine Ausnehmung auf, die in einem ersten Bereich V-förmig und in einem zweiten Bereich, insbesondere einem Bodenbereich der Ausnehmung, W-förmig ausgebildet ist, wobei die Schenkel des V-förmigen Bereichs zueinander bevorzugt einen Winkel im Bereich von etwa 50° bis 110° bilden. Nach dem Biegen des Werkstücks liegen die Schenkel des W-förmigen Bereichs der Ausnehmung aneinander und bilden einen Nullspalt. Zudem liegen die Schenkel des V-förmigen Bereichs der Ausnehmung nach dem Biegen aneinander und bilden einen Nullspalt. Es bilden sich somit drei Nullspalte: ein Nullspalt im V-förmigen Bereich und zwei Nullspalte im W-förmigen Bereich d.h. zwischen den Schenkeln der beiden den W-förmigen Bereich bildenden V-förmigen Ausnehmungen. Diese Nullspalte werden bevorzugt dann durch Schweißen, insbesondere Laserschweißen, geschlossen.

Ein wesentlicher Vorteil einer Ausnehmung dieser Art liegt darin, dass beim Biegen nur ein besonders kleiner Bereich verformt wird. Bei einer Ausnehmung dieser Art, die zur Biegeinnenseite offen ist, ist dieser Bereich beispielsweise ein der Beigeinnenseite abgewandter Bereich. Dadurch wird die Festigkeit des Materials des Werkstücks beim Biegen nur in geringem Maße beeinflusst. Zusätzlich können durch Ausnehmungen dieser Art große Biegewinkel bei gleichzeitig geringem Materialeinfluss erzielt werden. Zudem werden gute Biegeeigenschaften unabhängig von der Walzrichtung des Werkstücks, d.h. die Richtung, in der die Walze bei Herstellung des Rohlings verläuft, erzielt. Nach dem Biegen des Werkstücks mit einer Ausnehmung dieser Art weist das Werkstück an dem Scheitelpunkt der Biegung eine größere Dicke auf als in dem nicht-gebogenen Bereich des Werkstücks. Wird das Werkstück beispielsweise um einen Winkel von 110° gebogen, weist der Scheitelpunkt eine Dicke auf, die etwa dem 1,7-Fachen der Dicke des Werkstücks im nicht-gebogenen Bereich entspricht.

Nach einer weiteren bevorzugten Fortbildung der beiden vorstehend genannten Ausführungsformen schließen sich die Schenkel der W-förmigen Ausnehmung an die Schenkel der V-förmigen Ausnehmung an, insbesondere derart, dass sich die jeweils außen liegenden Schenkel der W-förmigen Ausnehmung an die Schenkel der V-förmigen Ausnehmung anschließen. Dies kann so verstanden werden, dass sich insbesondere die freien Enden der außenliegenden Schenkel der W-förmigen Ausnehmung an die Schenkel der V-förmigen Ausnehmung anschließen. Dabei schließen sich die Schenkel der V-förmigen Ausnehmung nicht aneinander an, sondern erstrecken sich jeweils von den Enden der W-förmigen Ausnehmung hin zur vorgesehenen Biegeinnenseite des Werkstücks d.h. beispielsweise zur offenen Seite der Ausnehmung. Dadurch kann insbesondere ein zur Biegeinnenseite hin offene Ausnehmung realisiert werden.

Bevorzugt entspricht der Winkel zwischen den Schenkeln der V-förmigen Ausnehmung dem Biegewinkel des Werkstücks. Weiter bevorzugt sind die jeweils außenliegenden Schenkel der W-förmigen Ausnehmung im Wesentlichen parallel zueinander ausgerichtet. Zudem nimmt weiter bevorzugt die Breite der W-förmigen Ausnehmung mit zunehmendem Winkel zwischen den Schenkeln der V-förmigen Ausnehmung zu.

In einer anderen zweckmäßigen Ausgestaltung des erfindungsgemäßen Stahlprofils weist das Werkstück eine zum Verstärken der Schwächung im Biegebereich auf. Damit wird ein besonders stabiles und einfach herstellbares Stahlprofil angegeben.

Die eingangs genannte Aufgabe wird erfindungsgemäß ferner gelöst durch eine Spundbohle, insbesondere Z-Spundbohle, welche von einem oben beschriebenen Stahlprofil gebildet wird, welches gemäß einem Verfahren der oben beschriebenen Art erstellt wird. Eine nach dem erfindungsgemäßen Verfahren hergestellte Spundbohle weist insbesondere an den Scheitelpunkten der Biegungen eine erhöhte Dicke im Vergleich zu den nicht-gebogenen Bereichen der Spundbohle auf. Spundbohlen weisen in der Regel in den nicht-gebogenen Bereichen der Spundbohle eine Dicke in der Größenordnung von etwa ∼ 12 mm gemäß DIN 10248 auf.

Bevorzugte Ausführungsbeispiele der Erfindung werden nun anhand der Zeichnungen erläutert.

Die Zeichnungen zeigen:
- Fig. 1: ein Ausführungsbeispiel eines erfindungsgemäßen Verfahrens,
- Fig. 2: ein Ausführungsbeispiel eines erfindungsgemäßen Stahlprofils,
- Fig. 3: ein erstes Ausführungsbeispiel eines erfindungsgemäßen Systems,
- Fig. 4A-B: weitere Ausführungsbeispiele eines erfindungsgemäßen Verfahrens,
- Fig. 5: zwei erste Ausführungsbeispiele zweier Spundbohlen,
- Fig. 6: eine Querschnittansicht eines erstes Ausführungsbeispiel einer Spundwand,
- Fig. 7: ein zweites Ausführungsbeispiel eines Systems,
- Fig. 8: eine perspektivische Ansicht eines Ausführungsbeispiels eines Werkstücks,
- Fig. 9: eine perspektivische Ansicht des in Figur 8 abgebildeten Bandstahlrohlings in einem Zwischenzustand,
- Fig. 10: zwei zweite Ausführungsbeispiele zweier Spundbohlen,
- Fig. 11: eine perspektivische Ansicht eines zweiten Ausführungsbeispiels einer Spundwand,
- Fig. 12: eine Querschnittansicht eines zweiten Ausführungsbeispiels einer Spundwand und
- Fig. 13: eine Querschnittansicht eines Teilabschnitts eines Schlosselements.

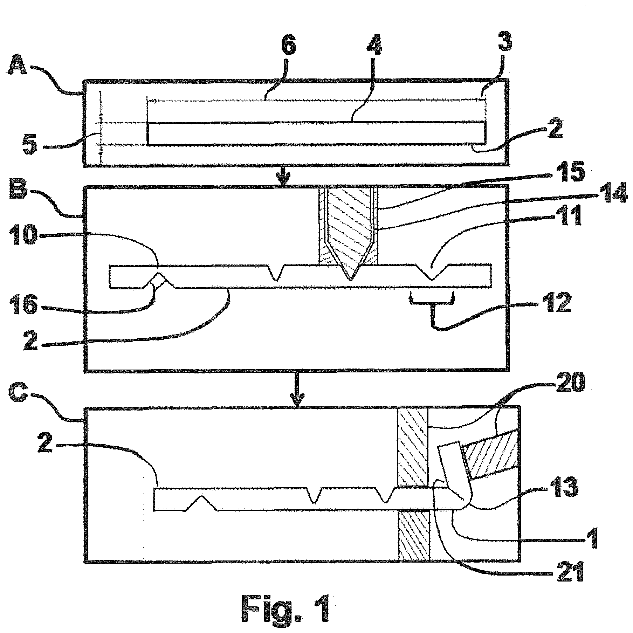

Figur 1 zeigt ein Ausführungsbeispiel eines erfindungsgemäßen Verfahrens zur Herstellung eines Stahlprofils 1. Dabei ist ein Werkstück 2 jeweils in einer Ansicht von der Seite quer zu einer Längsrichtung 3 des Werkstücks 2 gezeigt.

In einem Schritt A wird das Werkstück 2 in Form eines rechteckförmigen Band-Stahlrohlings 4 bereitgestellt, welcher eine Höhe 5 und eine Länge 6 aufweist.

In einem Schritt B werden Schwächungen 10 in Form von Ausnehmungen 11 in einem Bereich 12 einer vorgesehenen Biegung 13 des Werkstücks 2 gebildet. Dazu arbeitet eine Werkzeugeinheit 15, welche als Schwächungsvorrichtung 14 dient, ein Teilstück aus dem Werkstück 2 heraus. Dadurch werden V-förmige Ausnehmungen 11 mit zwei im Wesentlichen gleichlangen Schenkeln 16 gebildet.

In einem Verfahrensschritt C wird das Werkstück 2 im Biegebereich 12 mittels einer Biegevorrichtung 20 derart gebogen, dass eine in Schritt B gebildete Ausnehmung 11 an einer Biegeinnenseite 21 des Werkstücks 2 geschlossen wird. Dabei stoßen die Schenkel 16 der in Schritt B gebildeten Ausnehmung 11 im gebogenen Zustand aneinander.

In einem nicht gezeigten weiteren Verfahrensschritt werden die Schenkel 16 durch Laserschweißen unlösbar miteinander verbunden, so dass die ursprünglich als Ausnehmung 11 ausgebildete Schwächung zum Bilden eines Stahlprofils 1 mit hoher Steifigkeit verstärkt wird. Das Laserschweißen erfolgt dabei derart, dass der von den aneinander stoßenden Schenkeln 16 gebildete Spalt mittels einer Laserschweißnaht geschlossen wird. Der gebildete Spalt kann auch ein technischer Nullspalt sein. Die Schenkel müssen somit für das Schweißen nicht angepasst werden.

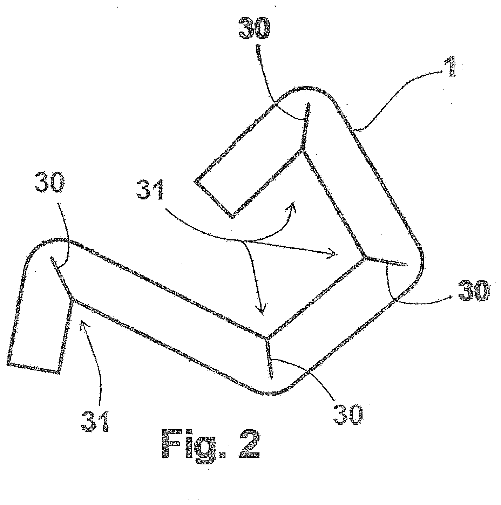

Figur 2 zeigt eine Seitenansicht eines Ausführungsbeispiels eines erfindungsgemäßen Stahlprofils 1, welches nach einem erfindungsgemäßen Verfahren aus dem in Figur 1 gezeigten Werkstück 2 hergestellt ist. Gleiche oder funktionsgleiche Elemente sind dabei mit denselben Bezugszeichen versehen.

Die im Herstellungsverfahren gebildeten Ausnehmungen sind durch den Biegevorgang geschlossen. Dabei weist das Stahlprofil Schweißnähte 30 auf, durch die die Ausnehmungen zum Stärken des Stahlprofils fest geschlossen werden. Die Schweißnähte verlaufen dabei an den Biegeinnenseiten 31 oder Biegeaußenseite in Betrachtungsrichtung entlang des Stahlprofils 1 und erstrecken sich entlang der in Figur 1 gezeigten Schenkel 1 teilweise in das Werkstück 2 hinein.

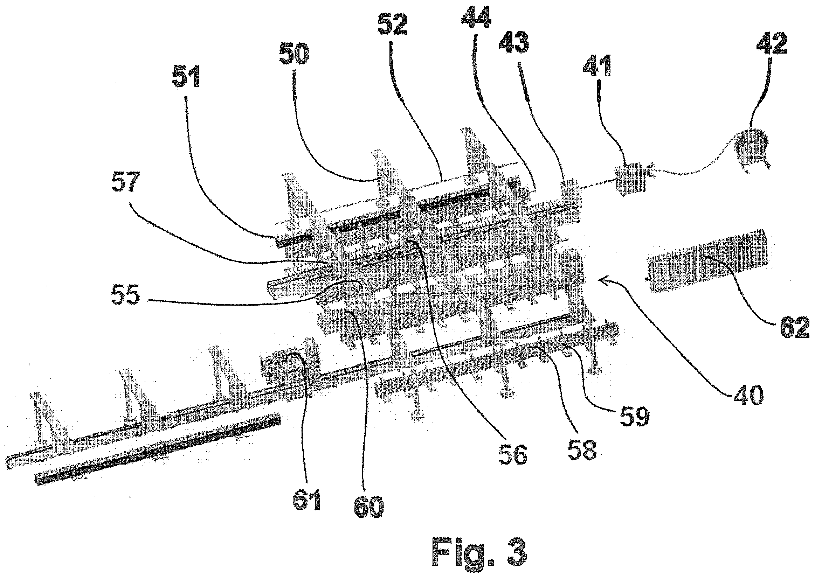

Figur 3 zeigt ein Ausführungsbeispiel eines erfindungsgemäßen Systems 40 zur Herstellung eines Stahlprofils aus einem Werkstück. Eine Zuführvorrichtung 41 entnimmt Bandstahl einer Bandstahlrolle 42, so dass der Bandstahl in einer Schneidevorrichtung 43 in Werkstücke 44 zerteilt werden kann, die eine für den weiteren Herstellungsprozess geeignete Größe aufweisen. Zudem weist das System eine zweite Zuführvorrichtung 50 auf, die einer Werkstückpalette 51 ein Werkstück 52 für das weitere Herstellungsverfahren entnimmt.

Transferelemente 55 führen die zu verarbeitenden Werkstücke 44 bzw. 52 einer Schwächungsvorrichtung 56 zu, die als Fräseinheit 57 ausgebildet ist.

Nachdem die Fräseinheit 57 eine Ausnehmung in dem Werkstück gebildet hat, wird das Werkstück 44 bzw. 52 durch die Transferelemente 55 einer Biegevorrichtung 60 zum Biegen des Werkstücks 44 bzw. 52 zugeführt.

Nach dem Biegen werden die Werkstücke 44 bzw. 52 einer Laserschweißvorrichtung 61 zugeführt, in der die Ausnehmungen der Werkstücke geschlossen werden. Nach dem Schweißen können die Stahlprofile 58 durch die Transferelemente 55 auf einem Stapel 59 abgelegt werden.

Das System 40 wird von einer zentralen Steuereinrichtung 62 gesteuert.

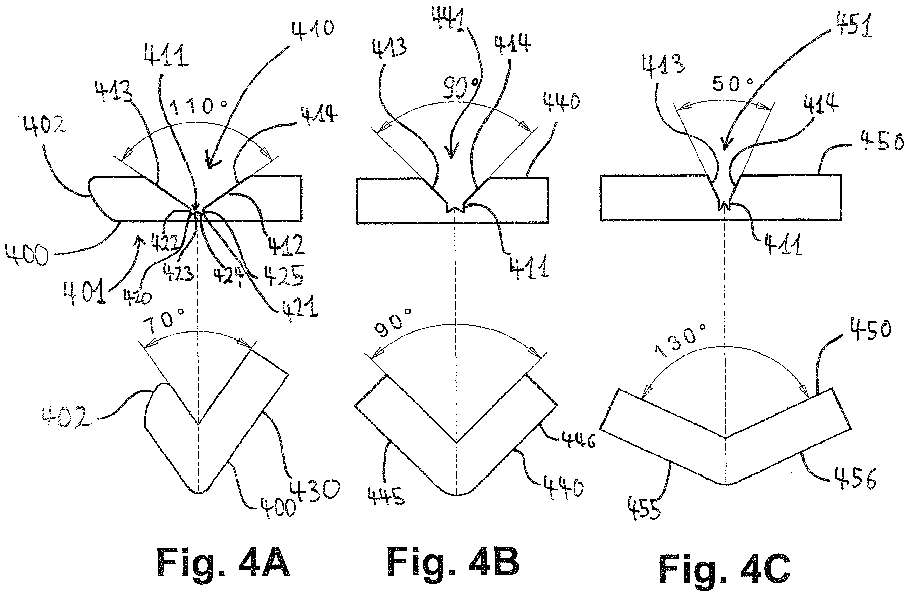

Figuren 4A-B zeigen ein zweites Ausführungsbeispiel eines erfindungsgemäßen Verfahrens. Insbesondere zeigen die Figuren 4A-B jeweils zwei Zwischenzustände eines Werkstücks 400 vor dem Biegen oben und nach dem Biegen unten.

Figur 4A zeigt insbesondere einen Endabschnitt 401 eines Werkstücks 400, bei dem das Ende 402 abgerundet, d.h. ohne scharfe Kanten, ausgebildet ist. In dem in Figur 4A oben gezeigten Zwischenzustand weist eine Ausnehmung 410 in dem Werkstück 400 einen W-förmigen Bereich 411 und einen V-förmigen Bereich 412 auf. Der W-förmige Bereich 411 besteht aus einem ersten V-förmigen Teilabschnitt 420 und einem zweiten V-förmigen Teilabschnitt 421. Dabei schließt sich ein in Betrachtungsrichtung links gesehen erster Schenkel 413 des V-förmigen Bereichs 412 an einen ersten Schenkel 422 des ersten V-förmigen Teilabschnitts 420 an. Ein zweiter Schenkel 423 des V-förmigen Teilabschnitts 420 schließt sich an einen ersten Schenkel 424 des zweiten V-förmigen Teilabschnitts 421 an. Ein zweiter Schenkel 425 des zweiten V-förmigen Teilabschnitts 421 schließt sich an einen zweiten Schenkel 414 des V-förmigen Bereichs 412 an. In Betrachtungsrichtung gesehen von links nach rechts gehend, wird die Ausnehmung 410 begrenzt durch die folgenden sich aneinander anschließenden Elemente: erster Schenkel 413 des V-Förmigen Bereichs 412, ersten Schenkel 422 des ersten V-förmigen Teilabschnitts 420, zweiter Schenkel 423 des ersten V-förmigen Teilabschnitts 420, ersten Schenkel 424 des zweiten V-förmigen Teilabschnitts 421, zweiter Schenkel 425 des zweiten V-förmigen Teilabschnitts 421 und zweiter Schenkel 414 des V-förmigen Bereichs 412.

Der Öffnungswinkel zwischen dem ersten Schenkel 413 und dem zweiten Schenkel 414 ist dabei etwa 110°.

Figur 4A zeigt das Werkstück 400 unten in einem Zwischenzustand nach dem Biegen. Beim Biegen wurde das Werkstück um einen Biegewinkel von etwa 110° gebogen, so dass zwischen einem Endabschnitt 401 und einem in Betrachtungsrichtung gesehen rechten Abschnitt 430 des Werkstücks 400 ein Öffnungswinkel von etwa 70° besteht. Nach dem Biegen liegen die Schenkel der jeweiligen V-förmigen Bereiche bzw. Teilabschnitte aneinander bzw. bilden einen Nullspalt, d.h. der Schenkel 413 bildet mit dem Schenkel 414 einen Nullspalt, der Schenkel 422 bildet mit dem Schenkel 423 einen Nullspalt und der Schenkel 424 bildet mit dem Schenkel 425 einen Nullspalt.

Figur 4B zeigt ein Werkstück 440 mit einer Ausnehmung 441, die im Wesentlichen wie die Ausnehmung 410 geformt ist. Gleiche oder funktionsgleiche Elemente sind dabei mit denselben Bezugszeichen versehen. Bei der in Figur 4B gezeigten Ausnehmung 441 ist der Öffnungswinkel zwischen dem ersten Schenkel 413 und dem zweiten Schenkel 414 etwa 90°. Beim Biegen bilden die Schenkel 413 und 414 des V-förmigen Bereichs 412 sowie die Schenkel 422 und 423 und die Schenkel 424 und 425 des W-förmigen Bereichs 411 jeweils einen Nullspalt derart, dass zwischen den zueinander gebogenen Abschnitten 445 und 446 ein Öffnungswinkel von etwa 90° entsteht.

Figur 4C zeigt ein Werkstück 450 mit einer Ausnehmung 451, die im Wesentlichen wie die Ausnehmungen 410 (Figur 4A) und 441 (Figur 4B) geformt ist. Gleiche oder funktionsgleiche Elemente sind dabei mit denselben Bezugszeichen versehen. Bei der in Figur 4C gezeigten Ausnehmung 451 ist der Öffnungswinkel zwischen dem ersten Schenkel 413 und dem zweiten Schenkel 414 etwa 50°. Beim Biegen bilden die Schenkel 413 und 414 des V-förmigen Bereichs 412 sowie die Schenkel 422 und 423 und die Schenkel 424 und 425 des W-förmigen Bereichs 411 jeweils einen Nullspalt derart, dass zwischen den zueinander gebogenen Abschnitten 455 und 456 ein Öffnungswinkel von etwa 130° entsteht.

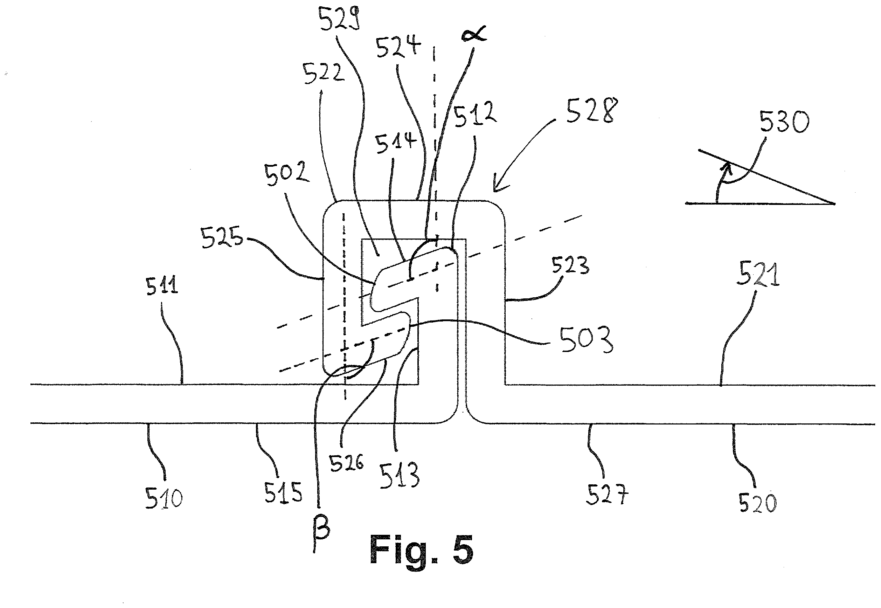

Figur 5 zeigt jeweils einen Teilabschnitt 510 bzw. 520 einer ersten Spundbohle 511 bzw. einer zweiten Spundbohle 521. Die erste Spundbohle 511 weist ein Schlosselement 512 auf, welches mit einem Schlosselement 522 der zweiten Spundbohle 521 in Eingriff steht. Im Sinne der Figur 5 sind Winkelangaben mit positiven Werten von mehr als +0° als Winkelausrichtungen im Uhrzeigersinn 530 zu verstehen; negative Winkelangaben mit negativen Werten von weniger als -0° sind als Winkelausrichtungen entgegen dem Uhrzeigersinn zu verstehen.

Das Schlosselement 512 der ersten Spundbohle 511 wird gebildet von einer Anschlagleiste 513 und einer Hakenleiste 514. Die Anschlagleiste 513 erstreckt sich von einem Wandabschnitt 515 der ersten Spundbohle 511 in einem im Wesentlichen rechten Winkel (etwa -90°). Die dazu erforderliche Biegung eines Werkstücks kann dabei beispielsweise über die in Figur 4B gezeigten Zwischenzustände des Werkstücks 440 erfolgen. Die Hakenleiste 514 erstreckt sich von der Anschlagleiste 513 in einem Winkel α von etwa -110°. Die Biegung eines Werkstücks, welche zum Erzielen eines derartigen Winkels, z.B. von etwa 110°, erforderlich ist, kann beispielsweise über die in Figur 4A gezeigten Zwischenzustände des Werkstücks 400 erfolgen. Das Ende der Hakenleiste 514 bildet gleichzeitig ein Ende 502 der ersten Spundbohle 511. Dieses Ende 502 ist abgerundet ausgebildet und weist zumindest im Querschnitt der Spundbohle gesehen keine scharfen Kanten auf. Das Schlosselement 522 der zweiten Spundbohle 521 wird gebildet von einer Anschlagleiste 523, einer Kopfleiste 524, einer Stirnleiste 525 und einer Hakenleiste 526. Die Anschlagleiste 523 erstreckt sich von einem Wandabschnitt 527 der zweiten Spundbohle 521 in einem im Wesentlichen rechten Winkel (etwa +90°). Die Kopfleiste 524 erstreckt sich von der Anschlagleiste 523 in einem im Wesentlichen rechten Winkel (etwa -90°). Die Stirnleiste 525 erstreckt sich von der Kopfleiste 524 in einem im Wesentlichen rechten Winkel (etwa -90°). Die Biegung eines Werkstücks, die zum Erzielen derartiger rechter Winkel erforderlich ist, können beispielsweise über die in Figur 4B gezeigten Zwischenzustände des Werkstücks 440 erfolgen. Die Hakenleiste 526 erstreckt sich von der Stirnleiste 525 in einem Winkel β von etwa -110°. Die Biegung eines Werkstücks, welche zum Erzielen eines derartigen Winkels, z.B. von etwa 110°, erforderlich ist, kann beispielsweise über die in Figur 4A gezeigten Zwischenzustände des Werkstücks 400 erfolgen. Das Ende der Hakenleiste 526 bildet gleichzeitig ein Ende 503 der zweiten Spundbohle 521. Dieses Ende 503 ist abgerundet ausgebildet und weist zumindest im Querschnitt der Spundbohle gesehen keine scharfen Kanten auf.

Die Anschlagleiste 523, die Kopfleiste 524 und die Stirnleiste 525 bilden einen U-förmigen Bereich 528 der Spundbohle 521. Zusammen mit dem Wandabschnitt 527 bildet der U-förmige Bereich 528 einen sichelförmigen Bereich der Spundbohle 521. Die Hakenleiste 526 ragt dabei in einen Innenraum 529 hinein, welcher von dem U-förmigen Bereich 528 bzw. sichelförmigen Bereich gebildet wird. In der in Figur 5 gezeigten Konstellation sind die Wandabschnitte 515 und 527 parallel zueinander ausgerichtet und in derselben Ebene angeordnet.

Werden die Wandabschnitte 515 und 527 aufeinander zubewegt, stoßen die Schlosselemente 512 und 522 jeweils mit ihren Anschlagleisten 513 und 523 aneinander an. Bei Zugbelastungen zwischen den gezeigten Spundbohlen 511 und 521, d.h. wenn die Spundbohlen mit hoher Kraft in Erstreckungsrichtung der Wandabschnitte voneinander wegbewegt werden, greifen die Schlosselemente derart ineinander, dass das Ende 502 der Hakenleiste 514 gegen die Stirnleiste 525 stößt und das Ende 503 der Hakenleiste 526 gegen die Anschlagleiste 513 stößt. Bei Druckbelastungen, beispielsweise quer zu Längserstreckungsrichtung der Spundbohlen 511 und 521, bleiben die Schlösser ineinander verhakt. Lediglich durch ein Verschieben der ineinandergreifenden Spundbohlen in Betrachtungsrichtung der Figur 5 können die Spundbohlen voneinander getrennt werden.

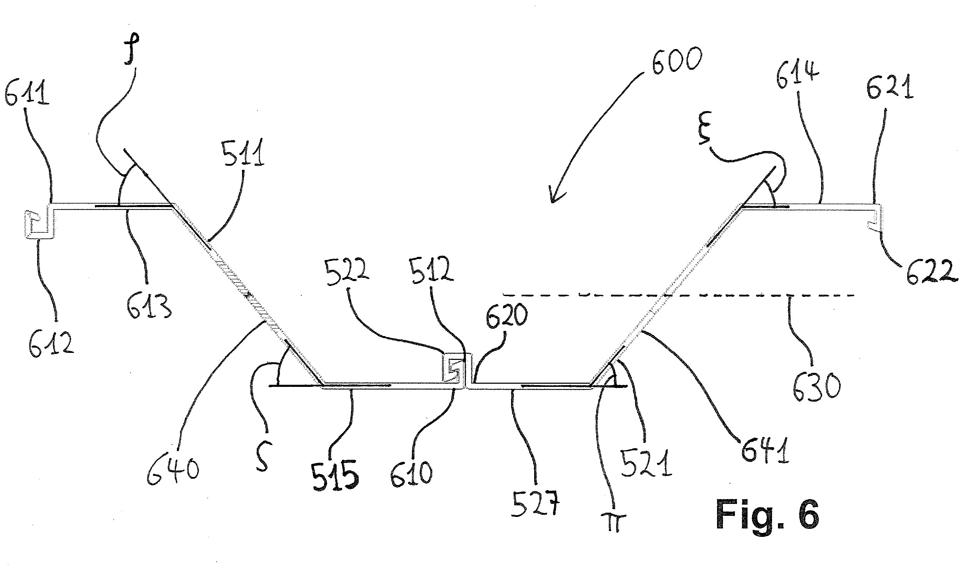

Figur 6 zeigt einen Teil einer Spundwand 600 mit zwei Spundbohlen. Die in Figur 6 gezeigten Spundbohlen sind ähnlich wie die in Figur 5 gezeigten Spundbohlen aufgebaut. Gleiche oder funktionsgleiche Elemente sind dabei mit denselben Bezugszeichen versehen. Eine erste Spundbohle 511 ist dabei im Wesentlichen Z-förmig ausgeführt mit einem ersten Wandabschnitt 515, welcher an einem Ende 610 (rechts) ein Schlosselement 512 aufweist. Eine zweite Spundbohle 521 ist im Wesentlichen Z-förmig ausgebildet mit einem ersten Wandabschnitt 527, welcher an einem Ende 620 (links) ein Schlosselement 522 aufweist.

Von dem ersten Wandabschnitt 515 der ersten Spundbohle 511 erstreckt sich ein zweiter Wandabschnitt 640 der ersten Spundbohle 511 in einem Winkel ς von etwa +50° zum ersten Wandabschnitt 515. Von dem zweiten Wandabschnitt 640 erstreckt sich ein dritter Wandabschnitt 613 der ersten Spundbohle 511 in einem Winkel ρ von etwa -50° zu dem zweiten Wandabschnitt 640. Der dritte Wandabschnitt 613 weist an einem Ende 611 ein Schlosselement 612 auf, welches im Wesentlichen wie das Schlosselement 522 der zweiten Spundbohle 521 aufgebaut ist. D.h. das Schlosselement 612 weist bei Spiegelung an einer Ebene 630 die gleiche Form wie das Schlosselement 522 auf.

Von dem ersten Wandabschnitt 527 der zweiten Spundbohle 521 erstreckt sich ein zweiter Wandabschnitt 641 der zweiten Spundbohle 521 in einem Winkel π von etwa -50° zum ersten Wandabschnitt 527. Von dem zweiten Wandabschnitt 641 erstreckt sich ein dritter Wandabschnitt 614 der zweiten Spundbohle 527 in einem Winkel ξ von etwa +50° zu dem zweiten Wandabschnitt 641. Der dritte Wandabschnitt 614 weist an einem Ende 621 ein Schlosselement 622 auf, welches im Wesentlichen wie das Schlosselement 512 der ersten Spundbohle aufgebaut ist. D.h. das Schlosselement 622 weist bei Spiegelung an einer Ebene 630 die gleiche Form wie das Schlosselement 512 auf.

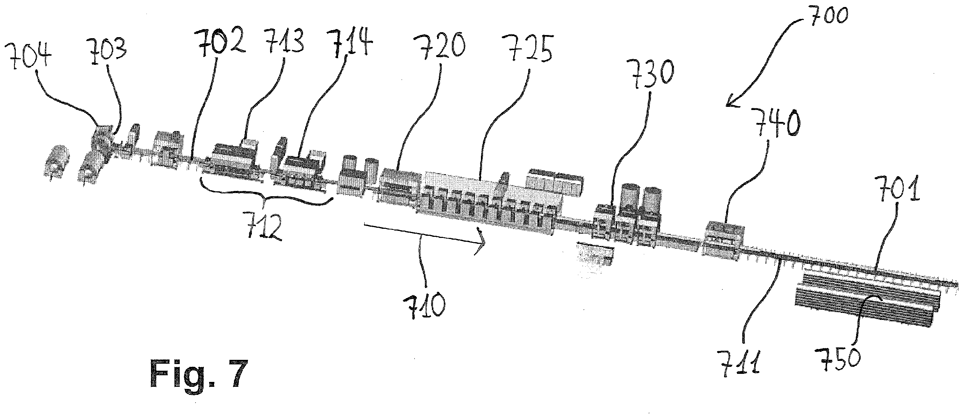

Figur 7 zeigt ein zweites Ausführungsbeispiel eines erfindungsgemäßen Systems 700 zur Herstellung einer Spundbohle 701 aus einem Band-Stahlrohling 702. Dabei wird der Band-Stahlrohling 702 von einer Bandstahlrolle 703 mittels einer Zuführvorrichtung 704 entrollt und den in Förderrichtung 710 folgenden Komponenten des Systems 700 zugeführt. Eine Fördervorrichtung 711 dient zum Fördern des Stahlrohlings 702 in Förderrichtung 710 entlang bzw. durch die einzelnen Komponenten des Systems 700.

Von der Zuführvorrichtung 704 gelangt der Band-Stahlrohling 702 in eine Fräsvorrichtung 712, mittels derer Ausnehmungen, welche als Schwächungen vorgesehen sind, in den Band-Stahlrohling 702 eingebracht werden. Die Fräsvorrichtung 712 weist zwei Fräseinheiten 713 und 714 auf. Mittels der Fräseinheit 713 werden zunächst Ausnehmungen von unten in den Band-Stahlrohling 702 eingebracht. Mittels der Fräseinheit 714 werden dann Ausnehmungen von oben in den Band-Stahlrohling 702 eingebracht.

Eine Laser-Schneidevorrichtung 720 dient dazu, in Förderrichtung gesehen, in vorgegebenen Abständen schlitzförmige Ausschnitte in den Band-Stahlrohling 702 einzubringen. Die Ausschnitte verlaufen jeweils quer zur Förderrichtung 710 von einem äußeren Rand des Band-Stahlrohlings 702 im Wesentlichen geradlinig in den Band-Stahlrohling 702 hinein. Insbesondere werden in vorgegebenen Abständen in Förderrichtung 710 gesehen jeweils zwei Schnitte eingebracht, nämlich jeweils von der seitlichen Begrenzung des Band-Stahlrohlings 702 für eine vorgegebene Tiefe nach innen. Die Schnitte werden insbesondere dazu eingebracht, um im folgenden Herstellungsprozess einzubringende Biegungen vornehmen zu können, ohne dass sich die Biegemomente auf den gesamten auf der Fördervorrichtung 710 befindlichen Band-Stahlrohling 702 übertragen. Dabei werden die Schnitte an den Stellen des Band-Stahlrohlings 702 eingebracht, wo im folgenden Herstellungsprozess die Abtrennung der Werkstücke von dem Band-Stahlrohling 702 vorgenommen wird.

Eine Biegevorrichtung 725 des Systems 700 ist ausgebildet, den Band-Stahlrohling 702 an unterschiedlichen Stellen zu biegen. Im Bereich der Biegungen werden die beim Biegen gebildeten Nullspalte mittels einer Laserschweißvorrichtung 730 geschlossen. Nach dem Schweißen werden mittels einer Schneidevorrichtung 740 die einzelnen Werkstücke von dem Stahlrohling 702 getrennt. Die fertigen Werkstücke können dann auf einem Stapel 750 beispielsweise für einen Transport gelagert werden.

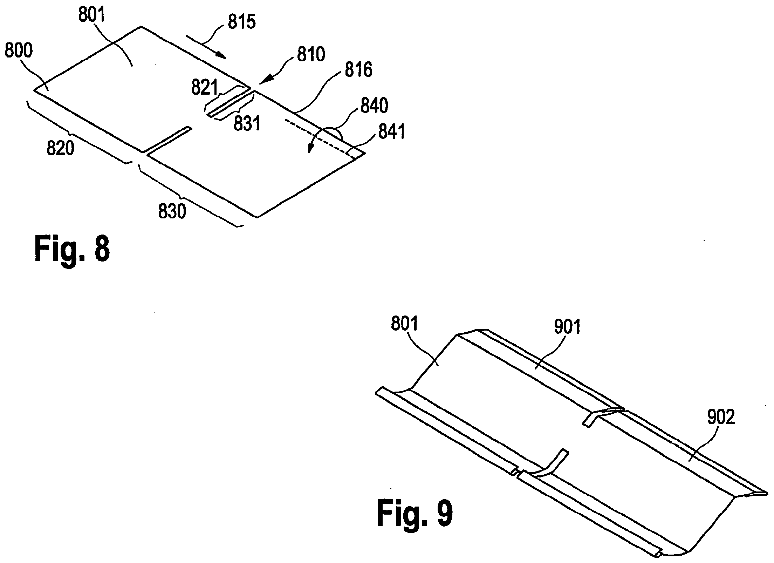

Figur 8 zeigt eine perspektivische Ansicht eines Teilabschnitts eines erfindungsgemäßen Werkstücks 800, welches als Bandstahlrohling 801 ausgebildet ist. In den Bandstahlrohling 801 sind Ausnehmungen 810 eingebracht, die sich quer zur Längserstreckungsrichtung 815 des Bandstahlrohlings 801 seitlich in den Bandstahlrohling 801 hinein erstrecken und zu einer seitlichen Begrenzung 816 des Bandstahlrohlings offen sind. Ein erster Bereich 820 begrenzt einen ersten Abschnitt 821 der Ausnehmung 810. Ein zweiter Bereich 830 begrenzt einen zweiten Abschnitt 831 der Ausnehmung 810. Ein Biegemoment 840 kann dabei auf den zweiten Bereich 830 des Bandstahlrohlings 801 in Form eines Drehmoments um die gestrichelt dargestellte Achse 841 ausgeübt werden. D.h. der in Betrachtungsrichtung unterhalb der gestrichelten Linie 841 abgebildete Bereich des Bandstahlrohlings bleibt in seiner Position bestehen, während der in Betrachtungsrichtung oberhalb der gestrichelten Linie 841 abgebildete Randbereich des Bandstahlrohlings ein Drehmoment um die Achse 841 erfährt. Ein Biegemoment 841 dieser Art überträgt sich dabei aufgrund der Ausnehmung 810 nicht auf den ersten Bereich 820 des Band-stahlrohlings. D.h. in dem zweiten Bereich 830 kann eine Biegung vorgenommen werden, ohne dass sich diese Biegung auf den ersten Bereich 820 überträgt bzw. auf den ersten Bereich 820 einen Einfluss hat.

Figur 9 zeigt eine perspektivische Ansicht des in Figur 8 abgebildeten Bandstahlrohlings 801 in einem Zwischenzustand nach dem Biegen. D.h. an dem in Figur 8 gezeigten Bandstahlrohling wurden Biegungen ausgeführt, die im Herstellungsprozess zur Herstellung einer Spundbohle an dem Bandstahlrohling vorgenommen werden. Figur 9 zeigt im Wesentlichen zwei Spundbohlen 901 und 902, die in einem im Herstellungsprozess folgenden Schritt voneinander getrennt werden.

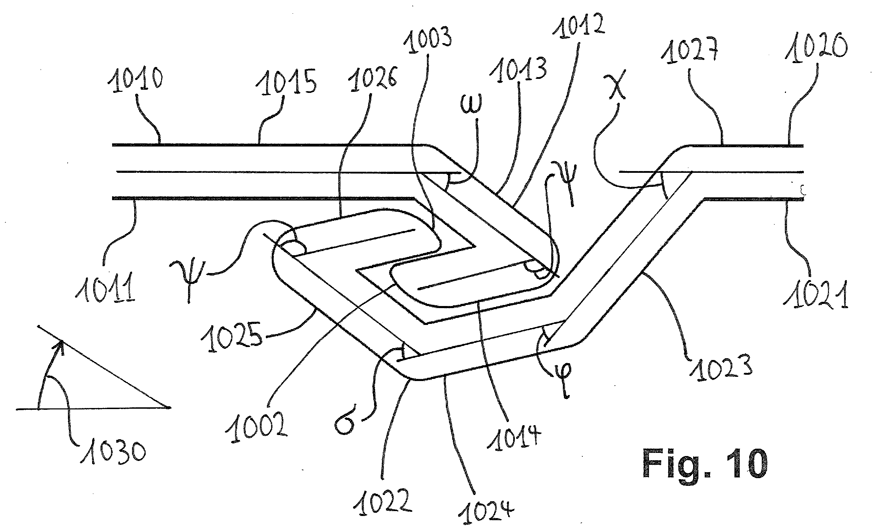

Figur 10 zeigt jeweils einen Teilabschnitt 1010 bzw. 1020 einer ersten Spundbohle 1011 bzw. einer zweiten Spundbohle 1021. Die erste Spundbohle 1011 weist ein Schlosselement 1012 auf, welches mit einem Schlosselement 1022 der zweiten Spundbohle 1021 in Eingriff steht. Im Sinne der Figur 10 sind Winkelangaben mit positiven Werten von mehr als +0° als Winkelausrichtungen im Uhrzeigersinn 1030 zu verstehen; negative Winkelangaben mit negativen Werten von weniger als -0° sind als Winkelausrichtungen entgegen dem Uhrzeigersinn zu verstehen.

Das Schlosselement 1012 der ersten Spundbohle 1011 wird gebildet von einer Anschlagleiste 1013 und einer Hakenleiste 1014. Die Anschlagleiste 1013 erstreckt sich von einem Wandabschnitt 1015 der ersten Spundbohle 1011 in einem Winkel ω von +38°. Die Hakenleiste 1014 erstreckt sich von der Anschlagleiste 1013 in einem Winkel Ψ von etwa +123°. Das Ende der Hakenleiste 1014 bildet gleichzeitig ein Ende 1002 der ersten Spundbohle 1011. Dieses Ende 1002 ist abgerundet ausgebildet und weist zumindest im Querschnitt der Spundbohle gesehen keine scharfen Kanten auf.

Das Schlosselement 1022 der zweiten Spundbohle 1021 wird gebildet von einer Anschlagleiste 1023, einer Kopfleiste 1024, einer Stirnleiste 1025 und einer Hakenleiste 1026. Die Anschlagleiste 1023 erstreckt sich von einem Wandabschnitt 1027 der zweiten Spundbohle 1021 in einem Winkel X von etwa -49,5°. Die Kopfleiste 1024 erstreckt sich von der Anschlagleiste 1023 in einem Winkel ϕ von etwa +30,5°. Die Stirnleiste 1025 erstreckt sich von der Kopfleiste 1024 in einem Winkel σ von etwa +57°. Die Hakenleiste 1026 erstreckt sich von der Stirnleiste 1025 in einem Winkel Ψ von etwa +123°. Das Ende der Hakenleiste 1026 bildet gleichzeitig ein Ende 1003 der zweiten Spundbohle 1021. Dieses Ende 1003 ist abgerundet ausgebildet und weist zumindest im Querschnitt der Spundbohle gesehen keine scharfen Kanten auf. In der in Figur 10 gezeigten Konstellation sind die Wandabschnitte 1015 und 1027 parallel zueinander ausgerichtet und in derselben Ebene angeordnet.

Bei Zugbelastungen zwischen den gezeigten Spundbohlen 1011 und 1021, d.h. wenn die Spundbohlen mit hoher Kraft voneinander wegbewegt werden, greifen die Schlosselemente derart ineinander, dass das Ende 1002 der Hakenleiste 1014 gegen die Stirnleiste 1025 und die Hakenleiste 1026 stößt und das Ende 1003 der Hakenleiste 1026 gegen die Anschlagleiste 1013 und Hakenleiste 1014 stößt. Bei Druckbelastungen, beispielsweise quer zu Längserstreckungsrichtung der Spundbohlen 1022 und 1021, bleiben die Schlösser ineinander verhakt. Lediglich durch ein Verschieben der ineinandergreifenden Spundbohlen in Betrachtungsrichtung der Figur 10 können die Spundbohlen voneinander getrennt werden.

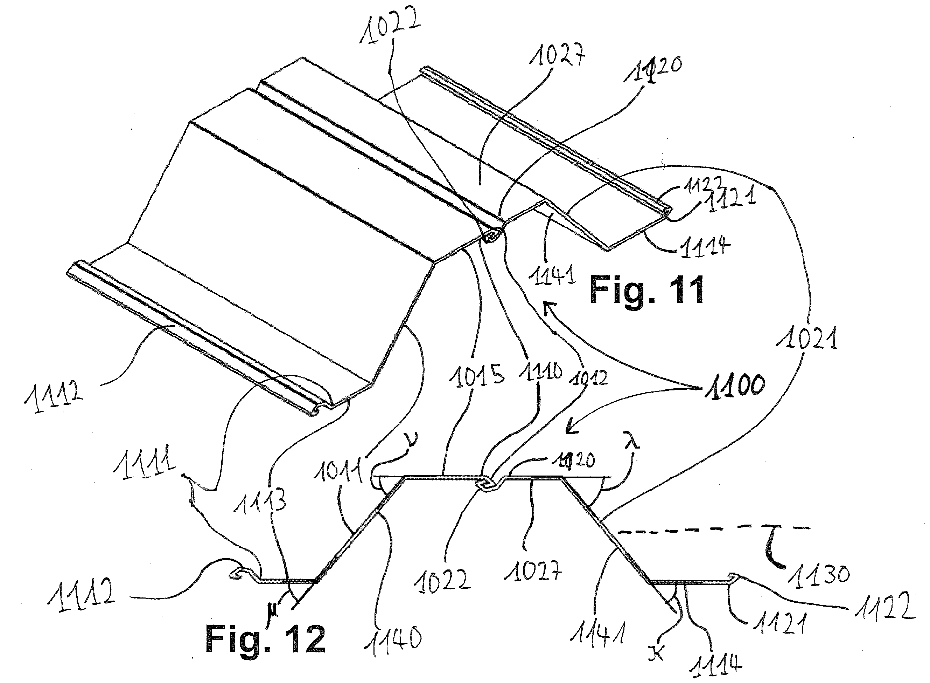

Figuren 11 und 12 zeigen jeweils einen Teil einer Spundwand 1100 mit zwei Spundbohlen. Dabei zeigt Figur 11 eine perspektivische Ansicht und Figur 12 eine Querschnittansicht der Spundwand 1100. Die in den Figuren 11 und 12 gezeigten Spundbohlen sind ähnlich wie die in Figur 10 gezeigten Spundbohlen aufgebaut. Gleiche oder funktionsgleiche Elemente sind dabei mit denselben Bezugszeichen versehen. Eine erste Spundbohle 1011 ist dabei im Wesentlichen Z-förmig ausgeführt mit einem ersten Wandabschnitt 1015, welcher an einem Ende 1110 (rechts) ein Schlosselement 1012 aufweist. Eine zweite Spundbohle 1021 ist im Wesentlichen Z-förmig ausgebildet mit einem ersten Wandabschnitt 1027, welcher an einem Ende 1120 (links) ein Schlosselement 1022 aufweist.

Von dem ersten Wandabschnitt 1015 der ersten Spundbohle 1011 erstreckt sich ein zweiter Wandabschnitt 1140 der ersten Spundbohle 1011 in einem Winkel v von etwa -50° zum ersten Wandabschnitt 1015. Von dem zweiten Wandabschnitt 1140 erstreckt sich ein dritter Wandabschnitt 1113 der ersten Spundbohle 1011 in einem Winkel µ von etwa +50° zu dem zweiten Wandabschnitt 1140. Der dritte Wandabschnitt 1113 weist an einem Ende 1111 ein Schlosselement 1112 auf, welches im Wesentlichen wie das Schlosselement 1022 der zweiten Spundbohle 1021 aufgebaut ist. D.h. das Schlosselement 1112 weist bei Spiegelung an einer Ebene 1130 die gleiche Form wie das Schlosselement 1022 auf.

Von dem ersten Wandabschnitt 1027 der zweiten Spundbohle 1021 erstreckt sich ein zweiter Wandabschnitt 1141 der zweiten Spundbohle 1021 in einem Winkel λ von etwa +50° zum ersten Wandabschnitt 1027. Von dem zweiten Wandabschnitt 1141 erstreckt sich ein dritter Wandabschnitt 1114 der zweiten Spundbohle 1027 in einem Winkel κ von etwa -50° zu dem zweiten Wandabschnitt 1141. Der dritte Wandabschnitt 1114 weist an einem Ende 1121 ein Schlosselement 1122 auf, welches im Wesentlichen wie das Schlosselement 1012 der ersten Spundbohle aufgebaut ist. D.h. das Schlosselement 1122 weist bei Spiegelung an einer Ebene 1130 die gleiche Form wie das Schlosselement 1012 auf.

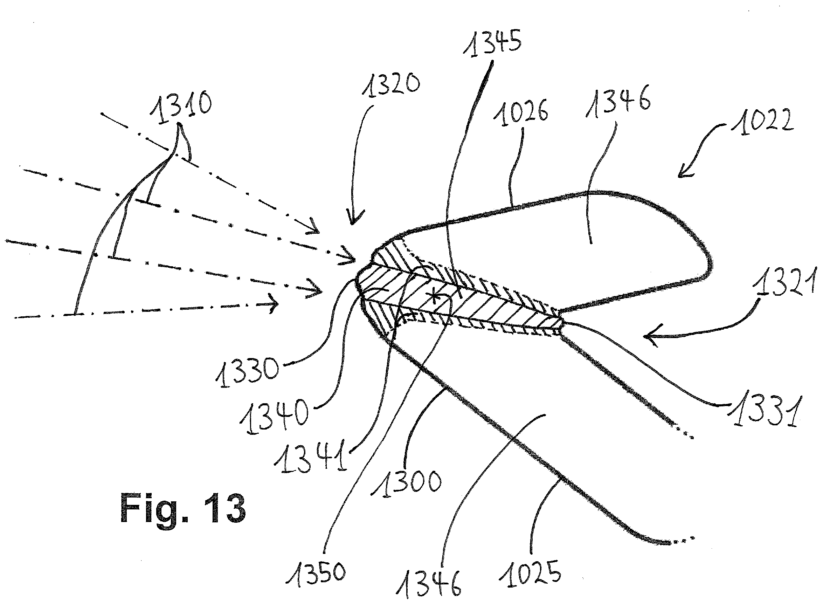

Figur 13 zeigt eine Querschnittansicht eines Teilabschnitts des in Fig. 10 gezeigten Schlosselements 1022. Diese Querschnittansicht verdeutlicht den Schweißvorgang nach dem Schritt des Biegens. Insbesondere zeigt Figur 13 eine Hakenleiste 1026 und einen Abschnitt einer Stirnleiste 1025. Nach dem Biegen bilden die Schenkel der Ausnehmung, beispielsweise die Schenkel 413 und 414 wie sie in Figur 4A abgebildet sind, einen Nullspalt. Zum Schließen (Schweißen) des Nullspalts wird ein Laserstrahl 1310 von der Biegeaußenseite 1320 hin zur Biegeinnenseite 1321 gerichtet. Der Laserstrahl 1310 verläuft im Inneren des Werkstücks 1300 im Wesentlichen entlang des Nullspalts. Nach dem Schweißen ist an der Biegeaußenseite 1320 der Schweißnaht eine Schweißwurzel 1330 und an der Biegeinnenseite 1321 der Schweißnaht eine Schweißwurzel 1331 gebildet. Im Inneren des Werkstücks 1300 bilden sich nach dem Schweißen zwei Bereiche 1340 und 1341 aus. Der Bereich 1340 wird von einem im Wesentlichen dreieckförmigen Schweißkern 1345 gebildet, der beim Schweißen vollständig aufgeschmolzen wird. Der Bereich 1341 wird von einem Übergangsbereich zwischen Schweißkern 1345 und dem beim Schweißen nicht beeinflussten Bereich 1346 des Werkstücks gebildet. Das Schweißen von der Biegeaußenseite 1320 sorgt für eine keilförmige Wurzel, deren Spitze zur Biegeinnenseite 1321 hin ausgerichtet ist. Dabei liegt der Fokus 1350 des Laserstrahls 1310 innerhalb des Werkstücks 1300, insbesondere in dem Bereich 1340. Diese Fokuslage, d.h. die Position des Fokus innerhalb des Werkstücks (ausgehend von dem Punkt, an dem der Laserstrahl auf das Werkstück auftrifft), sorgt für eine breite Wurzel, so dass ein weiter Bereich der Biegeaußenseite erfasst wird. Insbesondere bei W-förmigen Ausnehmungen, die im gebogenen Zustand schwalbenschwanzartig auskragen, können damit die beim Biegen gebildeten Nullspalte aufgeschmolzen werden. Auch der beim Biegen verformte Bereich wird dadurch aufgeschmolzen, so dass das Gefüge nach dem Erkalten spannungsärmer als im vorgebogenen Zustand ist.

Der Laserstrahl 1310, welcher zum Schweißen verwendet wird, weist vorzugsweise eine Leistung von 10 kW bis 14 kW (Kilowatt) auf. Insbesondere bei einem Biegewinkel von etwa 110° beträgt die Leistung des Schweiß-Laserstrahls bevorzugt etwa 14 kW bei einer bevorzugten Fokuslage von etwa -14 mm, bei einem Biegewinkel von etwa 90° beträgt die Leistung des Schweiß-Laserstrahls bevorzugt etwa 12 kW bei einer bevorzugten Fokuslage von etwa -16 mm und bei einem Biegewinkel von etwa 50° beträgt die Leistung des Schweiß-Laserstrahls bevorzugt etwa 10 kW bei einer bevorzugten Fokuslage von etwa -8 mm. Vorzugsweise bewegt sich der Schweiß-Laserstrahl beim Schweißen in Betrachtungsrichtung der Fig. 13 gesehen entlang des zu schweißenden Werkstücks mit eine Geschwindigkeit von 1,5 bis 1,8 m/min (Meter pro Minute).

## Patentansprüche

1. Verfahren zur Herstellung eines Stahlprofils, umfassend die Schritte:
Bereitstellen eines Werkstücks (2, 44, 52), insbesondere eines Stahlrohlings, bevorzugt eines Band-Stahlrohlings,
Bilden einer Schwächung (10) im Bereich einer vorgesehenen Biegung des Werkstücks (2, 44, 52),
Biegen des Werkstücks (2, 44, 52) zum Erzeugen einer Biegung an dem Werkstück (2, 44, 52),
wobei die Schwächung (10) durch Bilden einer Ausnehmung (11) in dem Werkstück (2, 44, 52) gebildet wird,
wobei das Bilden der die Schwächung (10) bildenden Ausnehmung (11) durch Fräsen erfolgt,
**dadurch gekennzeichnet, dass** die Schwächung (10) nach dem Biegen durch Laserschweißen verstärkt wird, und
dass die Ausnehmung (11), an einer Biegeinnenseite (21) des Werkstücks (2, 44, 52) ausgebildet ist und beim Biegen verkleinert oder geschlossen wird,
wobei die Ausnehmung (11) nach dem Biegen durch Laserschweißen geschlossen wird, wobei
das Schweißen mittels eines fokussierten Laserstrahls (1310) erfolgt, welcher von der Biegeaußenseite (1320) des Werkstücks (1300) hin zur Biegeinnenseite (1321) entlang eines von der Ausnehmung (410) nach dem Biegen gebildeten Nullspalts gerichtet ist, dessen Fokus innerhalb des Werkstücks (1300) liegt.

2. Verfahren nach Anspruche 1,
wobei Schenkel (16), welche die Ausnehmung (11) begrenzen, unlösbar verbunden werden.

3. Verfahren nach einem der vorstehenden Ansprüche,
wobei das Biegen durch freies Biegen, Schwenkbiegen oder Gesenkbiegen erfolgt.

4. Verfahren nach einem der vorstehenden Ansprüche,
wobei das Bereitstellen des Werkstücks (2, 44, 52) durch Entrollen einer Band-stahlrolle (42), insbesondere eines Coils, erfolgt.

5. Verfahren nach einem der vorstehenden Ansprüche,
wobei in ein Werkstück (800), welches als Bandstahlrohling (801) ausgebildet ist, vor dem Biegen eine Ausnehmung (810) eingebracht wird, die im Wesentlichen quer zur Längsrichtung (815) des Bandstahlrohlings ausgerichtet ist und zu einer seitlichen Begrenzung (816) des Bandstahlrohlings (801) offen ist.

6. Verfahren nach Anspruch 5,
wobei die Ausnehmung (810) derart in den Bandstahlrohling (801) hineinragt, dass ein Biegemoment (840) in einem ersten Bereich (820) des Bandstahlrohlings (801), welcher einen ersten Abschnitt (821) der Ausnehmung (810) begrenzt, sich nicht auf einen zweiten Bereich (830) des Bandstahlrohlings (801) überträgt, welcher einen zweiten Abschnitt (831) der Ausnehmung (810) begrenzt.

7. Stahlprofil, insbesondere hergestellt gemäß einem Verfahren nach einem der vorstehenden Ansprüche, umfassend
ein Werkstück (2, 44, 52), welches in einem Biegebereich eine Schwächung (10) aufweist,
**dadurch gekennzeichnet, dass** das Werkstück (2, 44, 52) eine Laserschweißnaht zum Verstärken der Schwächung (10) im Biegebereich (12) aufweist,
wobei die Schwächung (10) als Ausnehmung (11) in dem Werkstück (2, 44, 52) ausgebildet ist,
wobei das Werkstück (400) im Biegebereich eine im Wesentlichen W-förmige Ausnehmung aufweist.

8. Stahlprofil nach Anspruch 7,
wobei das Werkstück (400) eine Ausnehmung (410) aufweist, die in einem ersten Bereich (412) V-förmig und in einem zweiten Bereich (425), insbesondere einem Bodenbereich der Ausnehmung (410), W-förmig ausgebildet ist,
wobei die Schenkel (413, 414) des V-förmigen Bereichs (412) zueinander bevorzugt einen Winkel im Bereich von etwa 50° bis 110° bilden.

9. Stahlprofil nach Anspruch 8,
wobei sich die Schenkel der W-förmigen Ausnehmung an die Schenkel der V-förmigen Ausnehmung anschließen, insbesondere derart, dass sich die jeweils außen liegenden Schenkel der W-förmigen Ausnehmung an die Schenkel der V-förmigen Ausnehmung anschließen.

10. Spundbohle, insbesondere Z-Spundbohle, welche von einem Stahlprofil nach einem der Ansprüche 7-9 gebildet wird welches gemäß einem Verfahren nach einem der vorstehenden Ansprüche 1-6 erstellt wird.

## Claims

1. A method for producing a steel profile, said method comprising the steps of:
providing a workpiece (2, 44, 52), in particular a steel blank, preferably a steel strip blank,
forming a weakened point (10) in the region of a planned bend in the workpiece (2, 44, 52),
bending the workpiece (2, 44, 52) to produce a bend in the workpiece (2, 44, 52),
wherein the weakened point (10) is formed by forming an indentation (11) in the workpiece (2, 44, 52),
wherein the indentation (11) forming the weakened point (10) is formed by milling,
**characterized in that** the weakened point (10) after bending is reinforced by laser welding, and
that the indentation (11) is formed on an inner side of the bend (21) in the workpiece (2, 44, 52) and is reduced in size or closed during bending,
wherein the indentation (11) is closed after bending by laser welding, wherein
welding is done by using a focused laser beam (1310) which is aimed from the outer side of the bend (1320) in the workpiece (1300) to the inner side of the bend (1321) along a zero gap formed by the indentation (410) after bending, the focus of said beam being inside the workpiece (1300).

2. The method according to claim 1,
wherein sides (16) which limit the indentation (11) are undetachably joined together.

3. The method according to any one of the preceding claims,
wherein bending is done by free bending, folding or die bending.

4. The method according to any one of the preceding claims,
wherein the workpiece (2, 44, 52) is provided by unrolling a steel strip roll (42), in particular a coil.

5. The method according to any one of the preceding claims,
wherein an indentation (810) is introduced before bending into a workpiece (800) in the form of a steel strip blank (801), said indentation being oriented substantially transverse to the longitudinal direction (815) of the steel strip blank and being open at a lateral edge (816) of the steel strip blank (801).

6. The method according to claim 5,
wherein the indentation (810) projects into the steel strip blank (801) in such a way that a bending moment (840) in a first region (820) of the steel strip blank (801) which limits a first portion (821) of the indentation (810) is not transmitted to a second region (830) of the steel strip blank (801) which limits a second portion (831) of the indentation (810).

7. A steel profile, in particular a steel profile produced by a method according to any one of the preceding claims, comprising:
a workpiece (2, 44, 52) which has a weakened point (10) in a bending region, **characterized in that** the workpiece (2, 44, 52) having a laser weld seam for reinforcing the weakened point (10) in the bending region (12),
wherein the weakened point (10) is formed as an indentation (11) in the workpiece (2, 44, 52),
the workpiece (400) having a substantially W-shaped indentation in the bending region.

8. The steel profile according to claim 7,
the workpiece (400) having an indentation (410) which is V-shaped in a first region (412) and W-shaped in a second region (425), in particular in a bottom region of the indentation (410),
the sides (413, 414) of the V-shaped region (412) preferably forming an angle ranging from approximately 50° to 110°.

9. The steel profile according to claim 8,
the sides of the W-shaped indentation adjoin the sides of the V-shaped indentation, in particular in such a way that the respective outer sides of the W-shaped indentation adjoin the sides of the V-shaped indentation.

10. A sheet pile, in particular a Z sheet pile formed by a steel profile according to claims 7-9, which is produced by a method according to any one of the preceding claims 1-6.

## Revendications

1. Procédé pour fabriquer un profilé en acier, comprenant les étapes :
de fourniture d'une pièce (2, 44, 52), en particulier d'une ébauche en acier, de préférence d'une ébauche en acier en forme de bande,
de formation d'un affaiblissement (10) dans la zone d'un cintrage prévu de la pièce (2, 44, 52),
de cintrage de la pièce (2, 44, 52) pour produire un cintrage sur la pièce (2, 44, 52),
dans lequel l'affaiblissement (10) est formé par formation d'un évidement (11) dans la pièce (2, 44, 52),
dans lequel la formation de l'évidement (11) formant l'affaiblissement (10) s'effectue par fraisage,
**caractérisé en ce que** l'affaiblissement (10), après le cintrage, est renforcé par soudage laser, et
que l'évidement (11) est réalisé sur une face intérieure de cintrage (21) de la pièce (2, 44, 52) et diminué ou fermé lors du cintrage,
dans lequel l'évidement (11), après le cintrage, est fermé par soudage laser, dans lequel
le soudage s'effectue au moyen d'un faisceau laser focalisé (1310), lequel est dirigé de la face extérieure de cintrage (1320) de la pièce (1300) en direction de la face intérieure de cintrage (1321) le long d'une fente nulle, formée par l'évidement (410) après le cintrage, dont le foyer se situe à l'intérieur de la pièce (1300).

2. Procédé selon la revendication 1,
dans lequel des branches (16), lesquelles délimitent l'évidement (11), sont reliées de manière non libérable.

3. Procédé selon l'une quelconque des revendications précédentes,
dans lequel le cintrage s'effectue par cintrage libre, cintrage par mandrin ou cintrage par presse.

4. Procédé selon l'une quelconque des revendications précédentes,
dans lequel la fourniture de la pièce (2, 44, 52) s'effectue par déroulement d'un rouleau d'acier en forme de bande (42), en particulier d'une bobine.

5. Procédé selon l'une quelconque des revendications précédentes,
dans lequel un évidement (810), qui est orienté sensiblement transversalement à la direction longitudinale (815) de l'ébauche en acier en forme de bande et est ouvert vers une délimitation latérale (816) de l'ébauche en acier en forme de bande (801), est ménagé avant le cintrage, dans une pièce (800), laquelle est réalisée en tant qu'ébauche en acier en forme de bande (801) .

6. Procédé selon la revendication 5,
dans lequel l'évidement (810) fait saillie dans l'ébauche en acier en forme de bande (801), de telle sorte qu'un couple de cintrage (840) dans une première zone (820) de l'ébauche en acier en forme de bande (801), laquelle délimite une première partie (821) de l'évidement (810), ne se transmet pas à une deuxième zone (830) de l'ébauche en acier en forme de bande (801), laquelle délimite une deuxième partie (831) de l'évidement (810).

7. Profilé en acier, en particulier fabriqué selon un procédé selon l'une quelconque des revendications précédentes, comprenant
une pièce (2, 44, 52), laquelle présente dans une zone de cintrage un affaiblissement (10),
**caractérisé en ce que** la pièce (2, 44, 52) présente un joint soudé au laser pour renforcer l'affaiblissement (10) dans la zone de cintrage (12),
dans lequel l'affaiblissement (10) est réalisé en tant qu'évidement (11) dans la pièce (2, 44, 52),
dans lequel la pièce (400) présente dans la zone de cintrage un évidement sensiblement en forme de W.

8. Profilé en acier selon la revendication 7,
dans lequel la pièce (400) présente un évidement (410), qui est réalisé dans une première zone (412) sensiblement en forme de V et dans une deuxième zone (425), en particulier une zone de fond de l'évidement (410), en forme de W,
dans lequel les branches (413, 414) de la zone en forme de V (412) forment l'une par rapport à l'autre de préférence un angle dans la plage de sensiblement 50° à 110°.

9. Profilé en acier selon la revendication 8,
dans lequel les branches de l'évidement en forme de W se raccordent aux branches de l'évidement en forme de V, en particulier de telle sorte que les branches, situées respectivement à l'extérieur, de l'évidement en forme de W se raccordent aux branches de l'évidement en forme de V.

10. Palplanche, en particulier palplanche en laquelle est formée par un profilé en acier selon l'une quelconque des revendications 7-9, lequel est créé selon un procédé selon l'une quelconque des revendications 1-6.
